# EUROPEAN PATENT APPLICATION

(11) **EP 3 511 893 A1**
(43) Date of publication of application: **17.07.2019**
(21) Application number: 18151473.8
(22) Date of filing: 12.01.2018
(51) Int. Cl.: G06Q 30/02

(54) **HAIR STYLE RECOMMENDATION APPARATUS**

(71) Applicant: Koninklijke Philips N.V., 5656 AE Eindhoven (NL)
(72) Inventor: Sisodia, Rajendra Singh, 5656 AE Eindhoven (NL); Jha, Kumar Ritesh, 5656 AE Eindhoven (NL)
(74) Representative: de Haan, Poul Erik

(57) **Abstract**

There is provided an apparatus (100) for creating a hair style recommendation for a user. The apparatus (100) comprises a processor (102) configured to analyze interactions of other users with social media content to identify interactions relating to a hair style in the social media content. The other users are linked on social media to the user. The processor (102) is also configured to extract, from the identified interactions and/or social media content relating to the identified interactions, information that characterizes the hair style in the social media content. The processor (102) is also configured to create a hair style recommendation for the user based on the extracted information.

## Description

### FIELD OF THE INVENTION

The invention relates to an apparatus for hair style recommendation and a method of operating the apparatus.

### BACKGROUND OF THE INVENTION

Hair styling can be a demanding, attractive, and important part of a person's social life. Aside from clothes and facial make-up, women are mostly conscious of their hair styles. For men, beard and moustache styling can be important as it generates attention and also acceptance in society and social circles. It is also now common for people to be encouraged to try new hair styles and be given opinions on hair styles that may suit them.

In this respect, there exist recommender systems that are operable to provide a user with recommendations of hair styles. These existing recommender systems either use a template based technique or a facial analysis based technique to recommend hair styles to the user. In the template based techniques, standard style templates are created and, for each style, standard facial or hair characteristics are defined. In the facial analysis based techniques, facial features are extracted from the user and a matching algorithm is used to recommend a hair style to the user based on the extracted facial features.

However, there are many disadvantages associated with these existing techniques. For example, existing hair style recommender systems do not take into account hair growth or spread. Also, the hair style guides used in existing techniques are device agnostic, which means that they are designed to work without adaptations to the capabilities of hair style devices. As such, the features of hair style guides may not be useful to a user. Furthermore, in existing techniques, the trends and hair style descriptions tend to be static.

Thus, existing hair style recommender systems are not dynamic. This is particularly disadvantageous since fashion trends are usually a short-term phenomenon. Also, it is not possible to easily overcome this issue in existing hair style recommender systems since incorporating new recommended hair styles in such existing hair style recommender systems is a difficult process. There are thus limitations associated with existing techniques, which can prevent relevant hair style recommendations from being provided to a user.

US 9,460,557 discloses an example of an existing technique in which a style recognizer extracts style feature information from images of people and recognizes style characteristics using the extracted style feature information. In this existing technique, a recommender then searches recommended style information matched with the recognized style characteristics to provide recommended style information to the user. However, providing style recommendations by extracting style feature information from images still suffers from many of the above-described disadvantages and thus this existing technique can also prevent relevant style recommendations from being provided to a user.

It would therefore be desirable to provide a hair style recommender that is capable of outputting more relevant hair style recommendations. There is thus a need for an improved apparatus for hair style recommendation and a method of operating the apparatus, which overcomes existing problems.

### SUMMARY OF THE INVENTION

As noted above, a limitation with existing techniques used to recommend hair styles to a user is that relevant style recommendations are often not provided to a user. It would thus be valuable to have an improved apparatus for hair style recommendation and a method of operating the apparatus, which overcomes existing problems.

Therefore, according to a first aspect, there is provided an apparatus for hair style recommendation for a user. The apparatus comprises a processor configured to analyze interactions of other users with social media content to identify interactions relating to a hair style in the social media content. The other users are linked on social media to the user. The processor is also configured to extract, from the identified interactions and/or social media content relating to the identified interactions, information that characterizes the hair style in the social media content and create a hair style recommendation for the user based on the extracted information.

In some embodiments, the processor may be configured to extract information that characterizes the hair style provided that the user interacts with the social medial content for which the interactions relating to the hair style are identified.

In some embodiments, the processor may be configured to create a hair style recommendation for the user based on the extracted information and any one or more of: one or more facial characteristics of the user, one or more hair characteristics of the user, one or more preferences of the user, a capability of the user in hair styles, and a capability of a hair styling device associated with the user.

In some embodiments, the processor may be configured to create the hair style recommendation for the user based on the extracted information by matching the extracted information with a database in which a plurality of hair styles are stored with information that characterizes the stored hair styles. In some embodiments, the processor may be further configured to create the hair style recommendation for the user as the hair style that is stored in the database with information that matches the extracted information.

In some embodiments, the processor may be further configured to store, in the database, the hair style from the social media content and the extracted information that characterizes the hair style from the social media content where no matches for the extracted information exist in the database.

In some embodiments, the processor may be configured to create a plurality of hair style recommendations for the user based on the extracted information. In some embodiments, the processor may be further configured to individually apply one or more of the plurality of created hair style recommendations to a facial template of the user and acquire feedback on each of the hair style recommendations applied to the facial template of the user. In some embodiments, the processor may be further configured to rank the plurality of created hair style recommendations based on the acquired feedback. In some embodiments, the processor may be further configured to assign a score to each of the plurality of created hair style recommendations based on the acquired feedback and rank the plurality of created hair style recommendations according to the scores assigned to the plurality of hair style recommendations. In some embodiments, the processor may be further configured to select one or more hair style recommendations for the user from the plurality of created hair style recommendations based on the acquired feedback.

In some embodiments, the processor may be further configured to check whether the created hair style recommendation for the user is compatible with a hair styling device associated with a user and update the created hair style recommendation for the user based on whether the created hair style recommendation for the user is compatible with the hair styling device associated with a user.

In some embodiments, the extracted information may comprise textual information and/or image information.

According to a second aspect, there is provided a method of operating an apparatus comprising a processor for hair style recommendation for a user. The method comprises analyzing, by the processor, interactions of other users with social media content to identify interactions relating to a hair style in the social media content. The other users are linked on social media to the user. The method further comprises extracting, by the processor, from the identified interactions and/or social media content relating to the identified interactions, information that characterizes the hair style in the social media content. The method also comprises creating, by the processor, a hair style recommendation for the user based on the extracted information.

According to a third aspect, there is provided a computer program product comprising a computer readable medium, the computer readable medium having computer readable code embodied therein, the computer readable code being configured such that, on execution by a suitable computer or processor, the computer or processor is caused to perform the method described above.

According to the aspects and embodiments described above, the limitations of existing techniques for recommending hair styles to a user are addressed. In particular, by taking into account the interactions of users (who are linked on social media to the user) with social media content in the creation of a hair style recommendation for the user, it is possible to provide more relevant hair style recommendations to the particular user. In effect, according to the above-described aspects and embodiments, it is possible to take into account styles that are trending through the social network (or social circle) of the user and optionally also the user's own interactions with (e.g. sentiment toward) social media content to provide more relevant hair style recommendations to the user. Moreover, the user can have confidence that the hair style recommendation provided by the above-described aspects and embodiments will be accepted in their social circle, which is desirable since a preferred style of a person is often heavily influenced by their social circle. For example, in Middle Eastern countries, the way a person maintains their beard has a heavier impact on their geographical social circle than other divergent social (or regional) groups.

Thus, according to the above-described aspects and embodiments, more relevant and more acceptable hair style recommendations can be provided to the user by way of a more dynamic technique. There is thus provided an improved apparatus for hair style recommendation and a method of operating the apparatus for hair style recommendation, which overcomes existing problems.

These and other aspects will be apparent from and elucidated with reference to the embodiment(s) described hereinafter.

### BRIEF DESCRIPTION OF THE DRAWINGS

Exemplary embodiments will now be described, by way of example only, with reference to the following drawings, in which:
Fig. 1 is a block diagram of an apparatus according to an embodiment;
Fig. 2 is a block diagram of an apparatus according to an example embodiment;
Fig. 3 is a flow chart illustrating a method of operating an apparatus according to an embodiment;
Fig. 4 illustrates an example of a plurality of hair style recommendations according to an embodiment;
Fig. 5 illustrates an example of a plurality of ranked hair style recommendations according to an embodiment; and
Figs. 6A, 6B and 6C illustrate an example of a user interface according to an embodiment.

### DETAILED DESCRIPTION OF THE EMBODIMENTS

As noted above, there is provided an improved apparatus for hair style recommendation and a method of operating the apparatus, which overcomes existing problems. More specifically, there is provided an apparatus for creating a hair style recommendation for a user and a method of operating such an apparatus. A hair style, as referred to herein, may be a style for hair at any location on the body of the user. For example, a hair style referred to herein may comprise a style for facial hair (such as a moustache or beard), a style for head hair, or a style for any other hair on the body of the user.

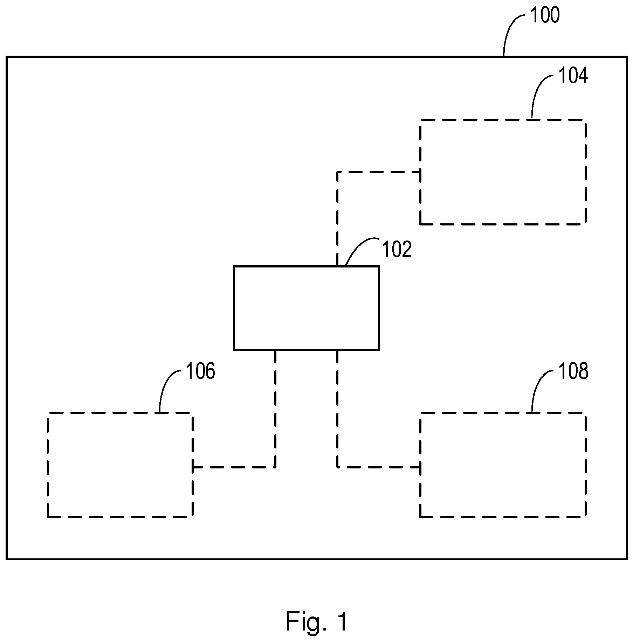

Fig. 1 illustrates an apparatus 100 for creating a hair style recommendation for a user according to an embodiment. As illustrated in Fig. 1, the apparatus 100 comprises a processor 102. The processor 102 can be implemented in numerous ways, with software and/or hardware, to perform the various functions described herein.

In particular implementations, the processor 102 can comprise a plurality of software and/or hardware modules, each configured to perform, or that are for performing, individual or multiple steps of the method described herein. The processor 102 may comprise one or more processors (such as one or more microprocessors, one or more multi-core processors and/or one or more digital signal processors (DSPs)), one or more processing units, and/or one or more controllers (such as one or more microcontrollers) that may be configured or programmed (e.g. using software or computer program code) to perform the various functions described herein. The processor 102 may be implemented as a combination of dedicated hardware (e.g. amplifiers, pre-amplifiers, analog-to-digital convertors (ADCs) and/or digital-to-analog convertors (DACs)) to perform some functions and a processor (e.g. one or more programmed microprocessors, controllers, DSPs and associated circuitry) to perform other functions.

Briefly, the processor 102 is configured to analyze interactions of other users with social media content to identify interactions relating to a hair style in the social media content. The other users mentioned herein are users that are linked on social media to the user. The processor 102 is further configured to extract, from the identified interactions and/or social media content relating to the identified interactions, information that characterizes the hair style in the social media content. Also, the processor 102 is configured to create a hair style recommendation for the user based on the extracted information.

As illustrated in Fig. 1, in some embodiments, the apparatus 100 may comprise a memory 104, or may be configured to communicate with and/or connect to a memory 104 external to (i.e. separate to or remote from) the apparatus 100. In some embodiments, the memory 104 may comprise any type of non-transitory machine-readable medium, such as cache or system memory including volatile and non-volatile computer memory such as random access memory (RAM), static RAM (SRAM), dynamic RAM (DRAM), read-only memory (ROM), programmable ROM (PROM), erasable PROM (EPROM), and electrically erasable PROM (EEPROM).

In some embodiments, the memory 104 can be configured to store program code that can be executed by the processor 102 of the apparatus 100 (or any other processor) to cause the apparatus 100 to operate in the manner described herein. Alternatively or in addition, the memory 104 can be configured to store information acquired by the apparatus 100 described herein. For example, in some embodiments, the memory may be configured to store the identified interactions relating to a hair style in the social media content, the information extracted from the identified interactions and/or social media content relating to the identified interactions, the hair style recommendation created for the user based on the extracted information, or any other information, or any combination of information mentioned herein. The processor 102 of the apparatus 100 can be configured to control the memory 104 to operate in the manner described herein.

As illustrated in Fig. 1, in some embodiments, the apparatus 100 may comprise a user interface 106, or may be configured to communicate with and/or connect to a user interface 106 external to (i.e. separate to or remote from) the apparatus 100. The user interface 106 can be configured to render (or output, display, or provide) information acquired by the apparatus 100 described herein. For example, in some embodiments, the user interface 106 may be configured to render (or output, display, or provide) the identified interactions relating to a hair style in the social media content, the information extracted from the identified interactions and/or social media content relating to the identified interactions, the hair style recommendation created for the user based on the extracted information, or any other information, or any combination of information mentioned herein. Alternatively or in addition, the user interface 106 can be configured to receive a user input. For example, the user interface 106 may allow a user to manually enter information or instructions, interact with and/or control the apparatus 100. Thus, the user interface 106 may be any user interface that enables the rendering (or outputting, displaying, or providing) of information and, alternatively or in addition, enables a user to provide a user input.

For example, the user interface 106 may comprise one or more switches, one or more buttons, a keypad, a keyboard, a mouse, a touch screen or an application (for example, on a smart device such as a tablet, a smartphone, or any other smart device), a display or display screen, a graphical user interface (GUI) such as a touch screen, or any other visual component, one or more speakers, one or more microphones or any other audio component, one or more lights (such as light emitting diode LED lights), a component for providing tactile or haptic feedback (such as a vibration function, or any other tactile feedback component), an augmented reality device (such as augmented reality glasses, or any other augmented reality device), a smart device (such as a smart mirror, a tablet, a smart phone, a smart watch, or any other smart device), or any other user interface, or combination of user interfaces. In some embodiments, the user interface 106 that is controlled to render information may be the same user interface 106 as that which enables the user to provide a user input. The processor 102 of the apparatus 100 can be configured to control the user interface 106 to operate in the manner described herein.

As illustrated in Fig. 1, in some embodiments, the apparatus 100 may comprise a communications interface (or communications circuitry) 108. The communications interface 108 can be for enabling the apparatus 100 or components of the apparatus 100 (such as the processor 102, memory 104, user interface 106 and/or any other components of the apparatus 100) to communicate with and/or connect to other apparatus, devices, components, interfaces, and/or memories. The communications interface 108 may be configured to communicate wirelessly, via a wired connection, or via any other communication (or data transfer) mechanism. In some wireless embodiments, the communications interface may, for example, use radio frequency (RF), Bluetooth, or any other wireless communication technologies, for communications.

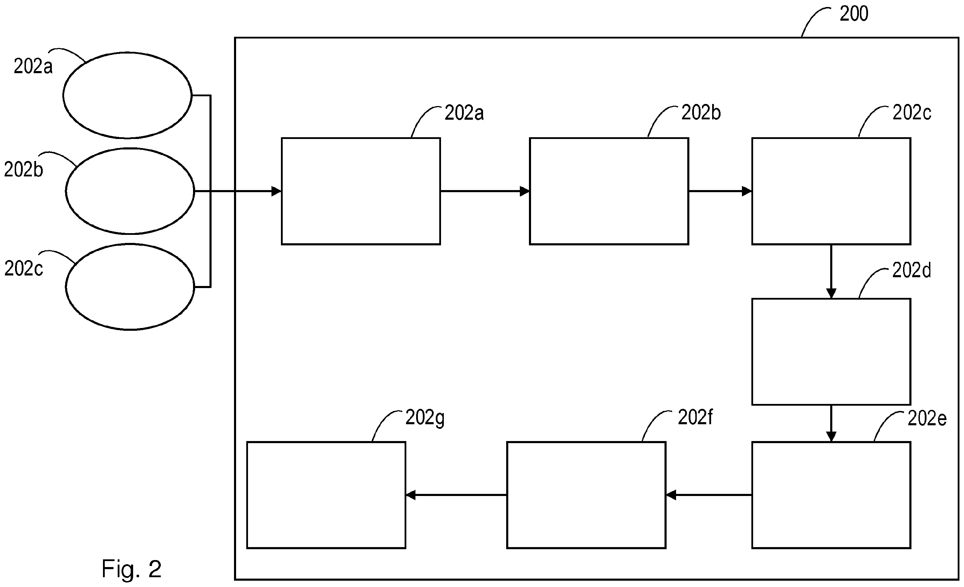

Fig. 2 illustrates an apparatus 200 for creating a hair style recommendation for a user according to an example embodiment. As illustrated in Fig. 2, the input to the apparatus 200 is social media content 202a, 202b, 202c since it is social media content that is analyzed, as described earlier. As also illustrated in Fig. 2, the apparatus 200 comprises a plurality of processors 202a, 202b, 202c, 202d, 202e, 202f, 202g. In some embodiments, the plurality of processors 202a, 202b, 202c, 202d, 202e, 202f, 202g can comprise a personalized influence network extractor 202a, a hair style extractor 202b, a preview and/or social preference extractor 202c, a recommended hair style list generator 202d, a profile match and hair style selector 202e, a hair style recommender 202f, and a hair style adaptor (or style guide adaptor) 202g. The processors 202a, 202b, 202c, 202d, 202e, 202f, 202g can be implemented in numerous ways, with software and/or hardware, to perform the various functions described herein. For example, the processors can be implemented in any of the ways described earlier with reference to the processor 102 of the apparatus 100 of Fig. 1.

Although not illustrated in Fig. 2, the apparatus 200 according to this example embodiment may also comprise any one or more of the memory 104, the user interface 106, the communications interface 108, and any other component, or any combination of components, described earlier with reference to Fig. 1.

Although the apparatus 100, 200 is described herein with reference to Figs. 1 and 2, it will be appreciated that Figs. 1 and 2 only show the components required to illustrate an embodiment and, in a practical implementation, the apparatus 100, 200 may comprise other components or additional components to those shown and/or described. For example, in some embodiments, the apparatus 100, 200 may comprise a battery or other power supply for powering the apparatus 100, 200 or means for connecting the apparatus 100, 200 to a mains power supply, or any other component, or any combination of components.

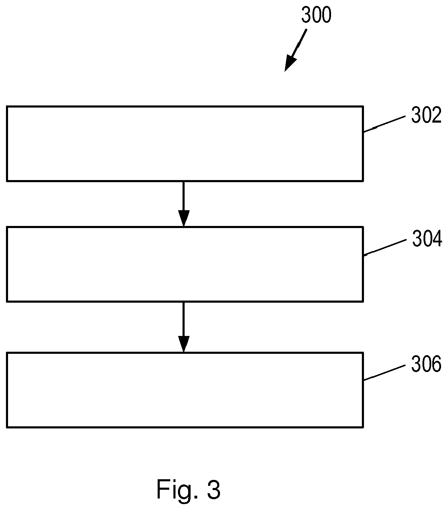

Fig. 3 illustrates a method 300 of operating the apparatus 100, 200 described herein for hair style recommendation for a user according to an embodiment. The method 300 can generally be performed by or under the control of the processor 102, 202a, 202b, 202c, 202d, 202e, 202f, 202g of the apparatus 100, 200.

At block 302, the interactions of other users with social media content are analyzed to identify (or detect) interactions relating to a hair style in the social media content. In the embodiment of Fig. 1, the processor 102 of the apparatus 100 is configured to analyze interactions of other users with social media content to identify interactions relating to a hair style in the social media content. In the embodiment of Fig. 2, the processor (or personalized network extractor) 202a of the apparatus 200 can be configured to analyze interactions of other users with social media content to identify interactions relating to a hair style in the social media content. In this way, by identifying interactions of the other users relating to a hair style in the social media content (which can, for example, provide cues about new hair styles or the latest trends in hair styles), an influence network can be created.

In more detail, in social media, each user has their own social network where users are linked to other users. Thus, as mentioned earlier, the other users referred to herein are users that are linked on social media to the user. For example, other users linked on social media to the user can be a social media "friend" of the user, a social media "follower" or "followee" of the user, or any other user that is linked to the user in some way on social media. Thus, the influence network that is created is a personalized influence network, since it is the interactions of other users that are linked to the user that are taken into account. The social media content referred to herein can, for example, comprise any one or more of an image (e.g. a photograph, a picture, or any other type of image), a posted comment, or any other social media content, or any combination of social media content.

The interactions of other users with the social media content referred to herein, which are analyzed, can comprise any type of social interaction, such as any one or more of a comment posted in response to social media content, an indication of approval or disapproval of social media content (e.g. a "like" indication, a "dislike" indication, an emoticon, or similar), or any other interactions with social media content, or any combinations of interactions with social media content. In some embodiments, the interactions relating to a hair style in the social media content that are identified can comprise interactions that are classified as a positive interaction (e.g. a positive comment, an indication of approval such as a "like" indication or a happy/smiling emoticon, or any other positive interaction) relating to a hair style in the social media content. For example, the interactions relating to a hair style in the social media content may be identified using sentiment analysis according to some embodiments.

Returning back to Fig. 3, at block 304, information that characterizes the hair style in the social media content is extracted from the identified interactions and/or social media content relating to the identified interactions. In effect, the information that characterizes the hair style in the social media content is extracted from the personalized influence network that is created. In the embodiment of Fig. 1, the processor 102 of the apparatus 100 is configured to extract the information. In the embodiment of Fig. 2, the processor (or style extractor) 202b of the apparatus 200 can be configured to extract the information. The information that characterizes the hair style in the social media content can comprise any hair style characteristics or any combination of hair style characteristics.

According to some embodiments, the extracted information referred to herein can comprise textual information, image information, or any other form of information that characterizes the hair style in the social media content. For example, the information that characterizes the hair style may be in the form of text that characterizes the hair style and/or an image that characterizes the hair style. The information that characterizes the hair style can thus be any descriptor of the hair style (or any hair style descriptor) or any combination of hair style descriptors. Examples of a hair style descriptor include, but are not limited to, an image descriptor (or image feature) of a hair style, a text descriptor (or text feature) of a hair style, or any other descriptor of a hair style.

The information that characterizes the hair style in the social media content can be extracted from the identified interactions and/or social media content relating to the identified interactions using any suitable technique. The technique may involve the use of one or more style extraction filters and a person skilled in the art will be aware of such style extraction filters that may be used. An example of a suitable technique that can be used for the information extraction is image analysis. Through image analysis, for example, image features that characterize the hair style in the social media content can be extracted from the identified interactions and/or social media content relating to the identified interactions. Another example of a suitable technique that can be used for the information extraction is text mining. According to some embodiments, text mining can use domain specific (e.g. hair style specific) vocabulary to extract information that characterizes the hair style in the social media content. Through text mining, for example, text (such as keywords) that characterizes the hair style in the social media content can be extracted from the identified interactions and/or social media content relating to the identified interactions. This can enable the capture of shorthand writing that is often used in social media content. Although some examples have been provided for the technique that can be used for the information extraction, a person skilled in the art will also be aware of other suitable techniques.

In an example to demonstrate blocks 302 and 304 of Fig. 3, the social media content may comprise an image in a post on social media that includes the comment "visited a salon and got a new hair style in a trendy color" with which other users linked to the user interact. These interactions of other users are identified as interactions relating to a hair style in the social media content (at block 302) and information that characterizes the hair style in the social media content is extracted from the identified interaction and/or social media content relating to the identified interaction (at block 304). For example, using text mining on the comment, the information that characterizes the hair style in the social media content may be extracted as the keywords "hair style" and "color". Then, using image analysis on the image, the hair style and color may be extracted from the image. It may be determined from the keywords that the hair style is not facial hair (such as a moustache or beard) and thus the image analysis technique used may be configured to ignore facial hair during the extraction of information that characterizes the hair style in the social media content.

In some embodiments, the processor 102, 202a may be configured to extract information that characterizes the hair style provided that the user interacts with the social medial content for which the interactions relating to the hair style are identified. In this way, by identifying interactions of the user and the other users with social media content relating to a hair style in the social media content (which can, for example provide cues about new hair style trends), an influence network can be created. The interactions of the user can comprise any type of interactions, such as any of those mentioned earlier in respect of the interactions of the other users. By taking into account the interactions of the user, it can be ensured that the social medial content, for which the interactions relating to the hair style are identified, is of interest to the user to thereby provide more reliable hair style recommendations for the user. The social medial content with which the user interacts can thus be considered as a "style influencer".

Returning back to Fig. 3, at block 306, a hair style recommendation is created for the user based on the extracted information. In the embodiment of Fig. 1, the processor 102 of the apparatus 100 is configured to create the hair style recommendation. In the embodiment of Fig. 2, one or more of the preview and/or social preference extractor 202c, the recommended hair style list generator 202d, and the profile match and hair style selector 202e of the apparatus 200 can be configured to create the hair style recommendation.

In some embodiments, the processor 102, 202c, 202d, 202e may be configured to create a hair style recommendation for the user based on the extracted information and other information associated with the user, such as one or more facial characteristics of the user, one or more hair characteristics of the user, one or more preferences of the user, a capability of the user in hair styles or creating hair styles (or in hair styling), a capability of a hair styling device associated with the user, any other information associated with the user, or any combination of information associated with the user. By taking into account this other information associated with the user in addition to the information extracted from the identified interactions and/or social media content relating to the identified interactions, the reliability of the hair style recommendations that are created can be further improved. For example, by taking into account a capability of a hair styling device associated with the user, it is possible to (e.g. automatically) adapt the hair style recommendation that is created to one that is appropriate to the capabilities of a hair styling device associated with the user. In this way, it is ensured that the hair style recommendation that is created will be possible to put into practice by the user using a hair styling device associated with the user (e.g. a hair styling device that the user owns).

In some embodiments, the processor 102, 202e may be configured to create the hair style recommendation for the user based on the extracted information by matching the extracted information (or hair style descriptors) with a database in which a plurality of hair styles are stored with information (or hair style descriptors) that characterizes the stored hair styles. Thus, in some embodiments, the processor 102, 202e may be configured to create the hair style recommendation for the user based on the extracted information by comparing the extracted information to the information that characterizes the hair styles stored in the database. The plurality of hair styles and associated information that characterizes the hair styles stored in the database may, for example, be part of a profile that captures hair characteristics for a hair style guide (such as a profile based hair style guide).

In some of these embodiments, the processor 102, 202e can be further configured to create the hair style recommendation for the user as the hair style that is stored in the database with information that matches or most closely matches (e.g. is most similar to) the extracted information. In some embodiments, the plurality of hair styles stored in the database may be stored with an associated score indicative of their popularity, for example, compared to other hair styles stored in the database. In these embodiments, the score for a stored hair style may be updated when the information associated with the stored hair style is matched or most closely matched to extracted information for the creation of a hair style recommendation.

In some embodiments, where no matches for the extracted information exist in the database (e.g. where the extracted information, or information similar to the extracted information, does not exist in the database) or where information stored in the database that matches (or is most similar to) the extracted information is found to be static (e.g. never or not regularly updated based on social media content), the processor 102, 202e of the apparatus 100, 200 can be further configured to store, in the database, the hair style from the social media content and/or the extracted information that characterizes the hair style from the social media content. This can ensure that the hair styles stored in the database are kept up to date based on newly emerging hair style trends, which is beneficial given that the social acceptance of hair style trends varies from time to time. In some of embodiments, where no matches for the extracted information exist in the database (e.g. where the extracted information, or information similar to the extracted information, does not exist in the database) or where information stored in the database that matches (or is most similar to) the extracted information is found to be static (e.g. never or not regularly updated based on social media content), the processor 102, 202e can be configured to create the hair style recommendation for the user based on the hair style from the social media content and/or the extracted information that characterizes the hair style from the social media content.

In any of the embodiments described herein that involve a database, the memory 104 may comprise the database. As described earlier, the memory 104 can be a memory of the apparatus 100, 200 or a memory external to (i.e. separate to or remote from) the apparatus 100, 200.

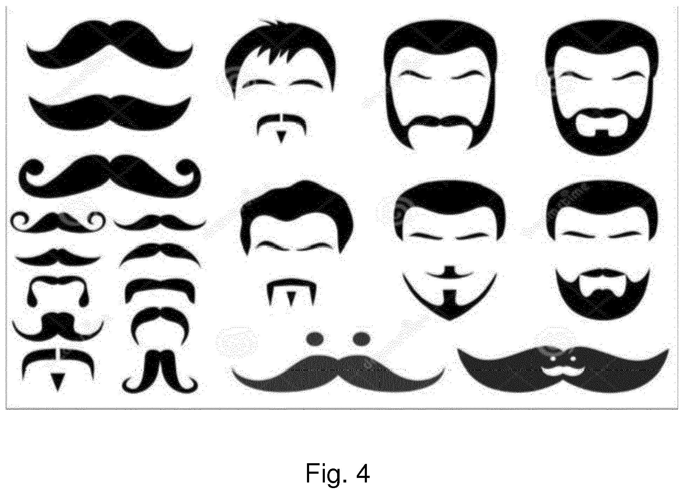

Although the embodiments described earlier mention creating "a" hair style recommendation for the user based on the extracted information, it will be appreciated that this can mean creating a single hair style recommendation for the user based on the extracted information or a plurality of hair style recommendations for the user based on the extracted information. Thus, the processor 102, 202c, 202d, 202e described herein can be configured to create a single hair style recommendation for the user based on the extracted information or a plurality of hair style recommendations for the user based on the extracted information. Fig. 4 illustrates an example plurality of hair style recommendations according to an embodiment.

In some embodiments where the processor 102, 202c, 202d, 202e is configured to create a plurality of hair style recommendations for the user, the processor 102, 202c can be further configured to individually apply one or more of the plurality of the created hair style recommendations to a facial template of the user. For example, the processor 102, 202c may be further configured to individually superimpose one or more of the plurality of the created hair style recommendations on (or over) the facial template of the user. The processor 102, 202c may also be further configured to acquire feedback on each of the hair style recommendations applied to the facial template of the user. For example, the facial template of the user with an applied hair style recommendation may be published (or posted) on social media (such as on a social platform) for other users. The feedback can then be in the form of interactions of other users with the published (or posted) content, such as a vote, a comment, a score, an emoticon, or any other interaction. Thus, a preview social network style feedback system can be provided according to some embodiments. By acquiring feedback on a hair style recommendation, it is possible to check that the hair style recommendation is accepted socially before the user invests time in creating that hair style recommendation.

In some embodiments where feedback is acquired, the processor 102, 202e may be further configured to select one or more hair style recommendations for the user from the plurality of created hair style recommendations based on the acquired feedback. Thus, according to some embodiments, the processor 102, 202e may be further configured to narrow down the plurality of hair style recommendations created for the user (e.g. to only a few choices, such as three choices) based on the acquired feedback. By narrowing down the plurality of hair style recommendations created for the user, a more manageable number of created hair style recommendations are provided and the hair style recommendations provided are the most popular (or most socially acceptable) to other users.

For example, the processor 102, 202e can be configured to select one or more hair style recommendations for the user by omitting hair style recommendations from the plurality of created hair style recommendations that receive negative feedback. Similarly, the processor 102, 202e can be configured to select one or more hair style recommendations for the user by maintaining hair style recommendations in the plurality of created hair style recommendations that receive positive feedback. In some embodiments, for example, the processor 102, 202e may be configured to select one or more hair style recommendations for the user by maintaining a predetermined number of the plurality of created hair style recommendations, such as those that receive the most positive feedback.

According to some embodiments, the plurality of created hair style recommendations may each be assigned a score based on the feedback acquired for that created hair style recommendation. The score for a created hair style recommendation may, for example, be determined based on the number and/or depth of interactions detected for that created hair style recommendation (such as the number of likes, emoticons, comments, depth of a discussion thread, and/or similar). In some embodiments, the score for a created hair style recommendation can also be determined based on a capability of the user in creating that particular hair style recommendation in practice (which can, for example, be based on a capability of a hair styling device associated with the user). In some embodiments where scores are assigned, the processor 102, 202e may be configured to select one or more hair style recommendations for the user by only maintaining the created hair style recommendations assigned with a score that is greater than a predefined threshold score. In some embodiments, the threshold score may be expressed as a percentage.

In some embodiments where feedback is acquired, the processor 102, 202d can be configured to rank (or generate a list of) the plurality of created hair style recommendations based on the acquired feedback. For example, in some embodiments, the processor 102, 202d may be configured to assign a score to each of the plurality of created hair style recommendations based on the acquired feedback (e.g. in the manner described earlier) and then rank the plurality of created hair style recommendations according to the scores assigned to the plurality of hair style recommendations. In this way, a preference list of recommended hair styles can be provided.

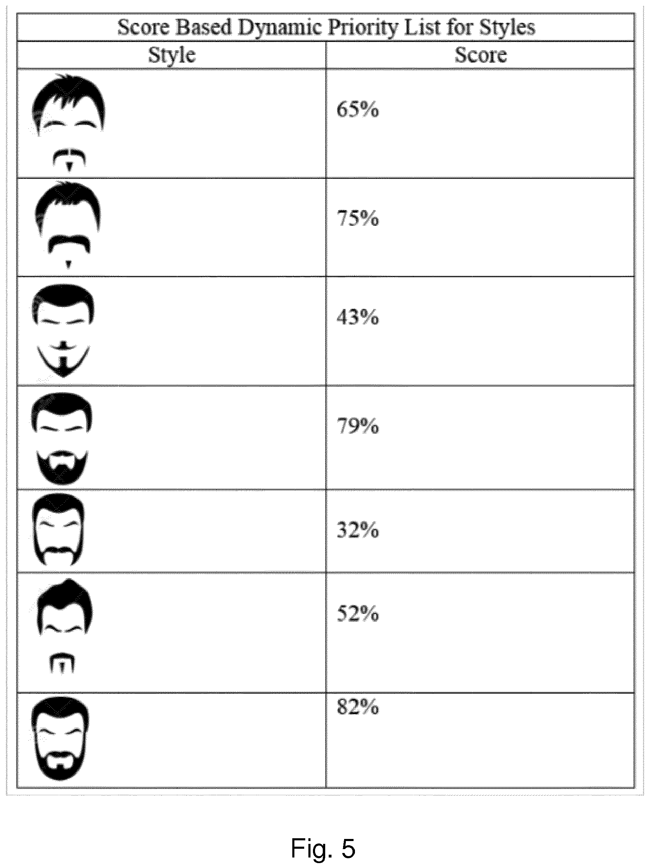

Fig. 5 illustrates an example plurality of ranked hair style recommendations according to an embodiment. As illustrated in Fig. 5, the plurality of ranked hair style recommendations may be provided in the form of a list (e.g. in a table) according to some embodiments. In the example embodiment illustrated in Fig. 5, the list of ranked hair style recommendations comprises a pictorial representation of the hair style recommendations together with the score assigned to each of the hair style recommendations. In this example, the score is expressed as a percentage. Although not illustrated in Fig. 5, in some embodiments, alternatively or in addition to the pictorial representation of the hair style recommendation, the list of ranked hair style recommendations may comprise one or more keywords associated with each of the hair style recommendations. In some embodiments, the list of ranked hair style recommendations can be used to select the one or more hair style recommendations for the user.

In some embodiments, the processor 102, 202f can be configured to control a user interface 106 to render (or output, display, or provide) the hair style recommendation or hair style recommendations created for the user. For example, the user interface 106 may comprise a display or display screen, a graphical user interface (GUI) or any other visual component for this purpose. As mentioned earlier, the user interface 106 can be a user interface of the apparatus 100, 200 or a user interface external to (i.e. separate to or remote from) the apparatus 100, 200.

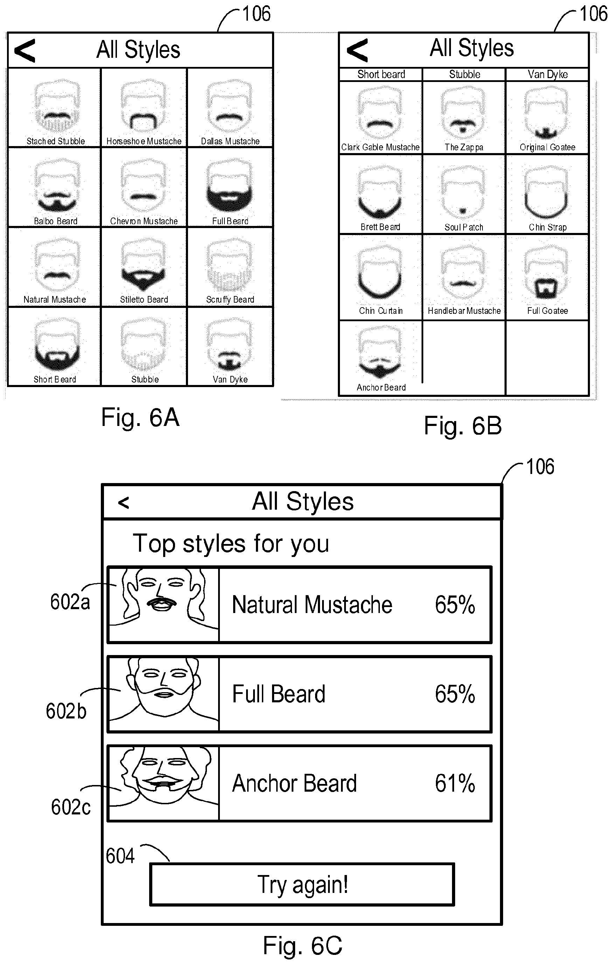

Figs. 6A, 6B and 6C illustrate an example of a user interface 106 rendering (or, more specifically, displaying) hair style recommendations according to an example embodiment. The user interface 106 according to this example embodiment is a graphical user interface (GUI), such as a touch screen. As illustrated in Figs. 6A and 6B, the processor 102, 202f of the apparatus 100, 200 is configured to control the user interface 106 to display the plurality of hair styles recommendations created for the user. In this example embodiment, as illustrated in Figs. 6A and 6B, it is possible for a user to scroll through the plurality of created hair style recommendations on the user interface 106.

Also, as illustrated in Fig. 6C, the processor 102, 202f of the apparatus 100, 200 is also configured to control the user interface 106 to display a selection of a few (in this example, three) hair style recommendations for the user that are selected from the plurality of created hair style recommendations based on acquired feedback, as described earlier. In this example embodiment, for each of the selected hair style recommendations, a pictorial representation 602a, 602b, 602c of the selected hair style recommendation is displayed (which can be the hair style recommendation applied to a facial template of the user or a generic image of the hair style recommendation), together with extracted information for the selected hair style recommendation (such as keywords describing the selected hair style recommendation) and the score (e.g. expressed as a percentage) assigned to the selected hair style recommendation based on the acquired feedback. In this example embodiment, as illustrated in Fig. 6C, the processor 102, 202f of the apparatus 100, 200 is also configured to control the user interface 106 to display a "Try again!" option 604 selectable by a user to cause the method of creating style recommendations described herein to be repeated.

In some embodiments, the processor 102, 202g can be configured to check whether the created hair style recommendation for the user is compatible with a hair styling device associated with a user. For example, the processor 102, 202g can be configured to analyze the extracted information that characterizes the hair style in the social media content to identify (or detect) information that is indicative of a hair styling device for creating the hair style recommendation in practice. The information that is indicative of the hair styling device may, for example, be an image of the hair styling device and/or text (e.g. keywords) identifying the hair styling device.

In some of these embodiments, the processor 102, 202g may also be configured to update the created hair style recommendation for the user based on whether the created hair style recommendation for the user is compatible with the hair styling device associated with a user. Thus, if the user is associated with a specific hair styling device (such as a trimmer, a shaver, or any other type of hair styling device), then the created hair style recommendation can be adapted according to the features of that hair styling device. For example, the processor 102, 202g may be configured to select a hair style recommendation only if it is compatible with the hair styling device associated with a user. In this way, the reliability of the hair style recommendations that are provided can be further improved since it is ensured that it will be possible for the user to put the hair style recommendation into practice using a hair styling device that is associated with the user (e.g. a hair styling device that is owned by the user).

In any of the embodiments described herein, at least one or all of the steps that the processor 102, 202a, 202b, 202c, 202d, 202e, 202f, 202g of the apparatus 100, 200 is configured to perform can be automated.

There is also provided a computer program product comprising a computer readable medium. The computer readable medium has computer readable code embodied therein. The computer readable code is configured such that, on execution by a suitable computer or processor, the computer or processor is caused to perform the method described herein. The computer readable medium may be, for example, any entity or device capable of carrying the computer program product. For example, the computer readable medium may include a data storage, such as a ROM (such as a CD-ROM or a semiconductor ROM) or a magnetic recording medium (such as a hard disk). Furthermore, the computer readable medium may be a transmissible carrier, such as an electric or optical signal, which may be conveyed via electric or optical cable or by radio or other means. When the computer program product is embodied in such a signal, the computer readable medium may be constituted by such a cable or other device or means. Alternatively, the computer readable medium may be an integrated circuit in which the computer program product is embedded, the integrated circuit being adapted to perform, or used in the performance of, the method described herein.

There is thus provided herein an improved apparatus 100, 200 for hair style recommendation, a method 300 of operating the apparatus 100, 200 for hair style recommendation, and a computer program product.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. An apparatus (100, 200) for hair style recommendation for a user, wherein the apparatus (100, 200) comprises a processor (102, 202a, 202b, 202e) configured to:
analyze interactions of other users with social media content to identify interactions relating to a hair style in the social media content, wherein the other users are linked on social media to the user;
extract, from the identified interactions and/or social media content relating to the identified interactions, information that characterizes the hair style in the social media content; and
create a hair style recommendation for the user based on the extracted information.

2. An apparatus (100, 200) as claimed in claim 1, wherein the processor (102, 202b) is configured to extract information that characterizes the hair style provided that the user interacts with the social medial content for which the interactions relating to the hair style are identified.

3. An apparatus (100, 200) as claimed any one of the preceding claims, wherein the processor (102, 202e) is configured to create a hair style recommendation for the user based on the extracted information and any one or more of:
one or more facial characteristics of the user;
one or more hair characteristics of the user;
one or more preferences of the user;
a capability of the user in hair styles; and
a capability of a hair styling device associated with the user.

4. An apparatus (100, 200) as claimed any one of the preceding claims, wherein the processor (102, 202e) is configured to create the hair style recommendation for the user based on the extracted information by:
matching the extracted information with a database in which a plurality of hair styles are stored with information that characterizes the stored hair styles.

5. An apparatus (100, 200) as claimed in claim 4, wherein the processor (102, 202e) is further configured to:
create the hair style recommendation for the user as the hair style that is stored in the database with information that matches the extracted information.

6. An apparatus (100, 200) as claimed in any one of claims 4 or 5, wherein the processor (102, 202e) is further configured to:
store, in the database, the hair style from the social media content and the extracted information that characterizes the hair style from the social media content where no matches for the extracted information exist in the database.

7. An apparatus (100, 200) as claimed any one of the preceding claims, wherein the processor (102, 202e) is configured to create a plurality of hair style recommendations for the user based on the extracted information.

8. An apparatus (100, 200) as claimed in claim 7, wherein the processor (102, 202c) is further configured to:
individually apply one or more of the plurality of created hair style recommendations to a facial template of the user; and
acquire feedback on each of the hair style recommendations applied to the facial template of the user.

9. An apparatus (100, 200) as claimed in claim 8, wherein the processor (102, 202d) is further configured to:
rank the plurality of created hair style recommendations based on the acquired feedback.

10. An apparatus (100, 200) as claimed in claim 9, wherein the processor (102, 202d) is further configured to:
assign a score to each of the plurality of created hair style recommendations based on the acquired feedback; and
rank the plurality of created hair style recommendations according to the scores assigned to the plurality of hair style recommendations.

11. An apparatus (100, 200) as claimed in any one of claims 8, 9 or 10, wherein the processor (102, 202d) is further configured to:
select one or more hair style recommendations for the user from the plurality of created hair style recommendations based on the acquired feedback.

12. An apparatus (100, 200) as claimed in any one of the preceding claims, wherein the processor (102, 202g) is further configured to:
check whether the created hair style recommendation for the user is compatible with a hair styling device associated with a user; and
update the created hair style recommendation for the user based on whether the created hair style recommendation for the user is compatible with the hair styling device associated with a user.

13. An apparatus (100, 200) as claimed in any one of the preceding claims, wherein the extracted information comprises textual information and/or image information.

14. A method (300) of operating an apparatus (100, 200) comprising a processor (102, 202a, 202b, 202e) for hair style recommendation for a user, wherein the method (300) comprises:
analyzing (302), by the processor (102, 202a), interactions of other users with social media content to identify interactions relating to a hair style in the social media content, wherein the other users are linked on social media to the user;
extracting (304), by the processor (102, 202b), from the identified interactions and/or social media content relating to the identified interactions, information that characterizes the hair style in the social media content; and
creating (306), by the processor (102, 202e), a hair style recommendation for the user based on the extracted information.

15. A computer program product comprising a computer readable medium, the computer readable medium having computer readable code embodied therein, the computer readable code being configured such that, on execution by a suitable computer or processor, the computer or processor is caused to perform the method as claimed in claim 14.
